# DEMANDE DE BREVET EUROPEEN

(11) **EP 0 629 342 A1**
(43) Date de publication de la demande: **21.12.1994**
(21) Numéro de dépôt: 94401378.8
(22) Date de dépôt: 20.06.1994
(51) Int. Cl.: A01G 23/04, B65B 25/02

(54) **Système pour le conditionnement de mottes d'arbres**

(30) Priorité: 18.06.1993 ES 9301354
(71) Demandeur: A.B. GRUPO ASESOR INDUSTRIAL, S.L., Pampelune (ES)
(72) Inventeur: Echarte Petri, Alberto, E-20300 Guipuzcoa (ES)
(74) Mandataire: Joly, Jean-Jacques

(57) **Abrégé**

Système pour le conditonnement de mottes d'arbres, selon lequel on utilise, comme élément de recouvrement des mottes (2), une membrane élastique (4) en forme de globe, en matière biodégradable, qu'on étire à la façon d'un ballon gonflé pour sa mise en place, par création d'un vide extérieur, en formant ainsi un creux pour l'introduction d'une motte (2) à recouvrir, cependant qu'une fois dans cet état, on laisse ladite membrane libre et que celle-ci se referme sous l'effet de sa reprise de forme élastique en s'adaptant sur la motte (2) logée à l'intérieur ; les moyens d'étirage étant agencés à l'intérieur d'un corps en forme de cuve (5) qui peut être agencé conjointement avec un groupe actionneur (7) pour former ainsi une unité autonome.

## Description

Le présente invention concerne un système pour le conditionnement de mottes d'arbres.

Le procédé habituel pour le conditionnement des mottes d'arbres, lorsqu'il s'agit de les transporter d'un lieu de plantation à un autre, consiste à creuser tout autour des racines, afin d'envelopper ces dernières, conjointement avec le bloc de terre dans lequel elles sont incluses, avec une enveloppe qui, traditionnellement, est habituellement à base de tissu, de matière plastique, de papier, de paille etc., sa fixation s'effectuant par un ligaturage manuel, ce qui se traduit par une opération compliquée, lente et coûteuse.

Pour résoudre ledit problème, on a développé des tentatives de mécanisation, basées sur des dispositifs ou machines conçus pour placer des enveloppes en grillage ou équivalents, procédé avec lequel, bien qu'on résolve certains aspects du problème, il se présente néanmoins d'autres inconvénients en raison de la complexité, d'un mauvais ajustement de l'enveloppe sur la motte qui donne lieu à des évidements et une perte de la terre de cette motte, et de l'embarras résultant de la nécessité d'effectuer une opération ultérieure pour retirer l'enveloppe sur le lieu de la plantation.

Selon la présente invention, on propose donc une nouvelle solution destinée à pallier les inconvénients mentionnés plus haut, basée sur un système qui est beaucoup plus avantageux et plus efficace que les procédés traditionnels utilisés pour le déroulement de la même fonction.

Ce système objet de l'invention consiste essentiellement dans l'utilisation d'une membrane en forme de globe, en latex, caoutchouc ou autre matière élastique similaire, de nature biodégradable, qui se place au moyen d'une machine avec laquelle on peut effectuer la fixation et l'étirage de la membrane pour placer à l'intérieur de cette membrane la motte à recouvrir, l'ajustement et l'adaptation de ladite membrane sur la motte s'effectuant par simple reprise élastique de cette membrane lorsqu'on la relâche.

Selon une forme de réalisation préférée, la machine qui est utilisée à cet effet est essentiellement constituée par un corps en forme de cuve, à l'intérieur duquel sont disposés un ensemble de bras, dans une disposition permettant de les faire pivoter simultanément dans le sens du rapprochement et de l'écartement par rapport à l'axe central, lesdits bras étant munis de moyens prévus pour la fixation et le relâchement ultérieur des membranes destinées à recouvrir les mottes, grâce au fait que le corps précité en forme de cuve renferme intérieurement des moyens capables de créer un vide pneumatique dans son volume intérieur, pour étirer la membrane par cet effet.

Dans un mode particulier, le corps précité en forme de cuve est en outre monté sur un support qu'on peut déplacer en le faisant rouler, dans lequel est en même temps monté un groupe électrogène capable de créer l'actionnement pneumatique nécessaire, de sorte qu'on obtient ainsi une unité totalement autonome, facile à transporter pour pouvoir être utilisée en un endroit quelconque où l'on en a besoin.

Les membranes utilisées sont à leur tour munies de conformations en forme de mamelles, lesquelles sont capables de se rompre lorsque la membrane a été placée sur la motte correspondante, de sorte qu'il se forme des ouvertures qui permettent le drainage sans dommage pour la plante ; de cette façon, pour effectuer la plantation à l'endroit prévu, il n'est pas nécessaire de retirer la membrane puisqu'étant biodégradable, elle se décompose, en finissant par disparaître d'elle-même, ce qui apporte un grand progrès dans le domaine écologique, puisqu'on évite les résidus que les autres procédés de plantation laissaient dans le sous-sol et, en outre, réalise une grande économie de travail et de temps. D'un autre côté, la motte reste entièrement compacte jusqu'à ce qu'elle soit enterrée au cours de la plantation.

Au total, ce système objet de l'invention présente certainement des caractéristiques très avantageuses qui lui confèrent une identité propre et un caractère préférentiel pour le déroulement de la fonction à laquelle il est destiné.

Pour mieux faire comprendre la nature de l'invention, nous représentons aux dessins annexés à titre d'exemple purement illustratif et non limitatif, une forme préférée de réalisation industrielle à laquelle nous nous reportons dans notre description. Et sur ces dessins,
La figure 1 montre une séquence représentative du procédé traditionnel de réalisation du conditionnement de la motte d'arbres ;
la figure 2 est une représentation respective de la séquence du procédé de conditionnement de motte selon le système préconisé selon la présente invention.

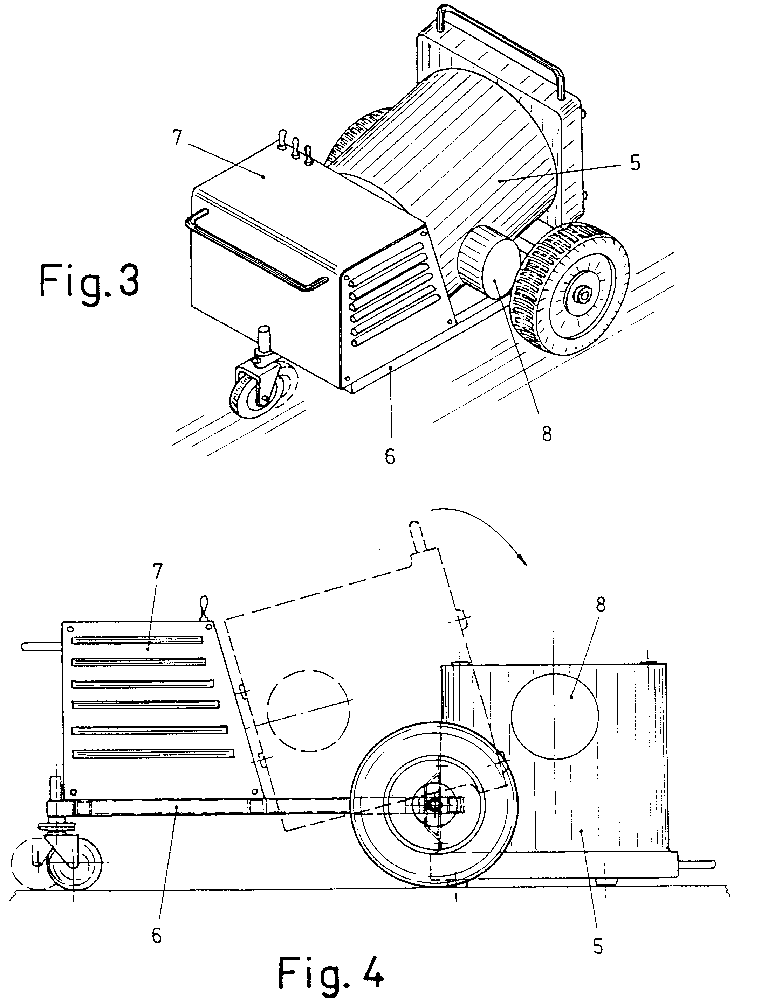

La figure 3 est une vue en perspective de la machine destinée à cette réalisation du conditionnement de motte conforme à l'invention.
La figure 4 est une vue en élévation de côté de la machine de réalisation du conditionnement de motte précitée, avec le corps-cuve dans la position de travail, sa position de transport étant représentée en traits discontinus.

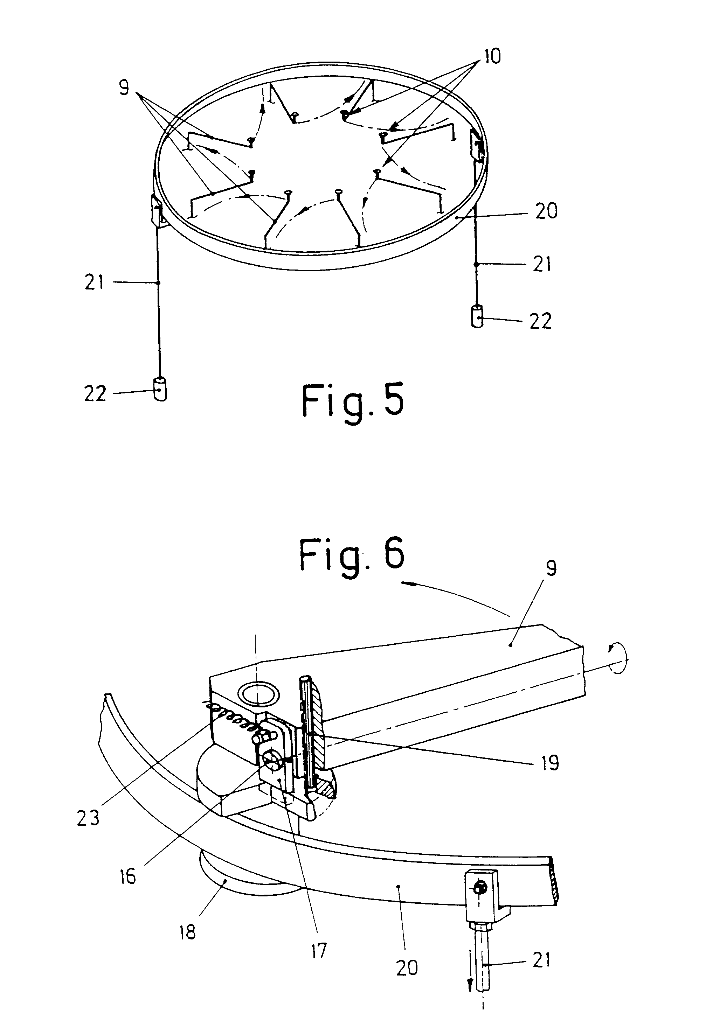

La figure 5 est un schéma représentatif de l'ensemble des bras de fixation et d'ouverture de la membrane pour sa mise en place.
La figure 6 est un détail agrandi en perspective de la disposition du montage articulé d'un des bras précités de fixation de la membrane.

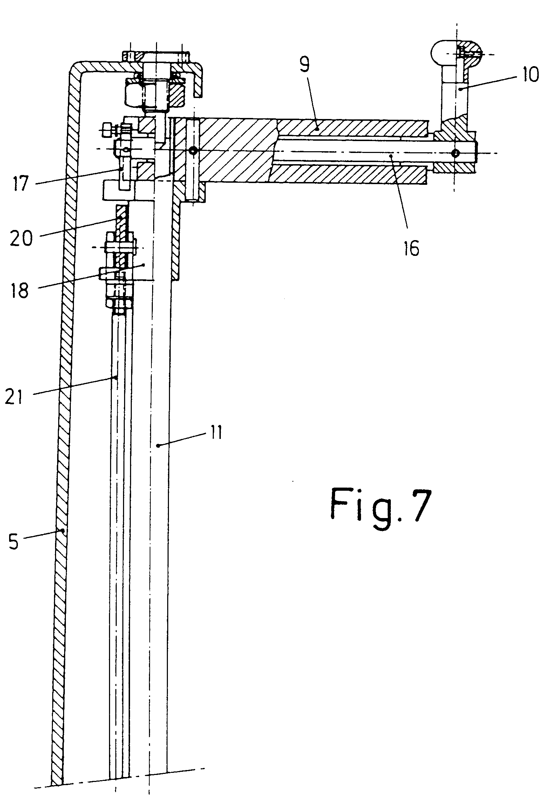

La figure 7 est une vue partielle en coupe agrandie de l'extrémité supérieure de l'ensemble support d'un desdits bras de fixation de la membrane.

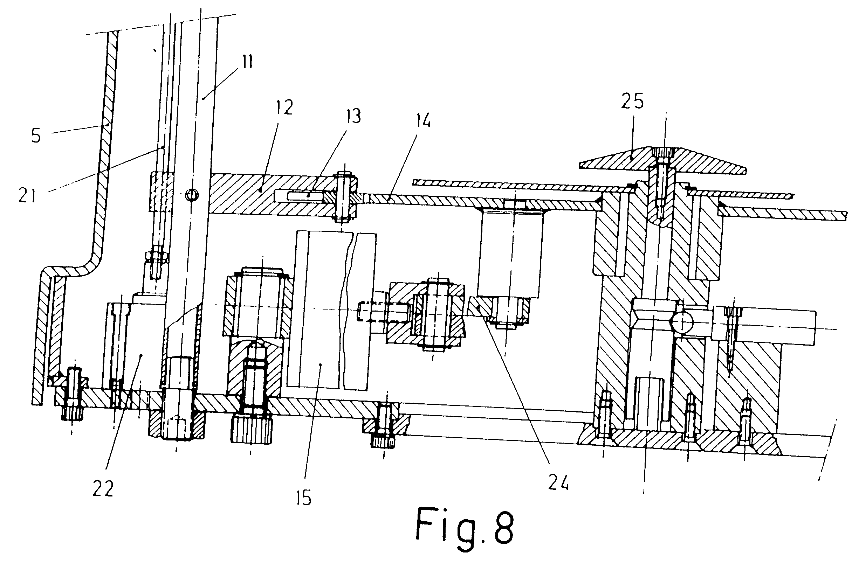

La figure 8 est une coupe respective de la partie complémentaire inférieure de l'ensemble support précité de la figure précédente.
La figure 9 est une demi-vue en plan de l'ensemble fonctionnel des bras précités de fixation de la membrane prévue pour le conditionnement de la motte.
Les figures 10, 11 et 12 montrent des vues correspondantes, avant, de profil en coupe et en plan, d'une membrane élastique du type de celles qu'on utilise pour le conditionnement de la motte conformément au système selon l'invention.

Liste des références
1. Enveloppe classique
2. Motte
3. Arbre
4. Membrane élastique
5. Corps-cuve
6. Châssis support
7. Groupe électrogène
8. Aspirateur
9. Bras
10. Broche
11. Colonne tournante
12. Elément perpendiculaire
13. Fentes
14. Plaque circulaire
15. Cylindres
16. Axe
17. Palette de blocage
18. Embout
19. Tige
20. Couronne
21. Tirants
22. Eléments actionneurs
23. Ressort
24. Compas de blocage
25. Soupape d'interruption du vide
26. Mamelles
27. Nervures
28. Embouchure

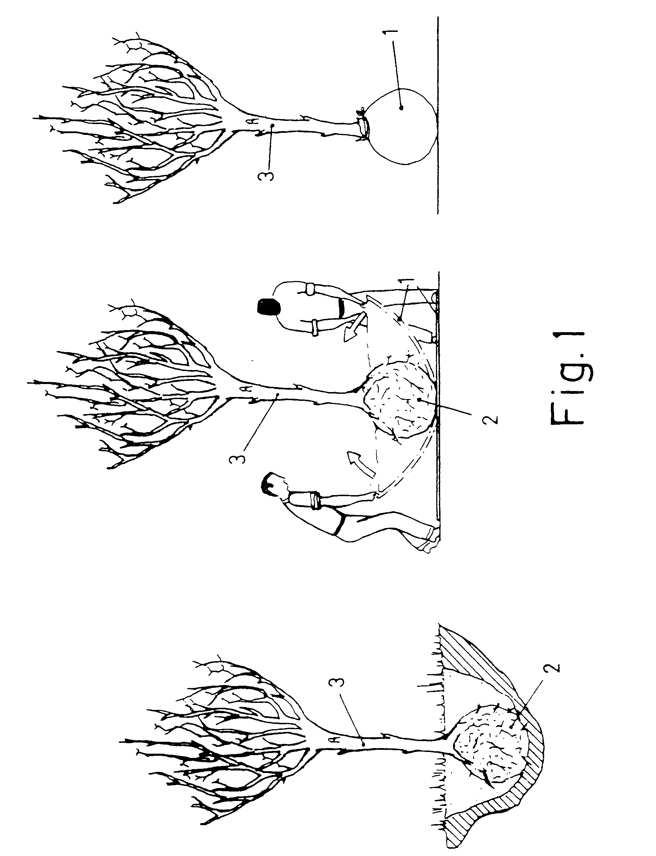

L'objet de la présente invention consiste en un système destiné à la réalisation du conditionnement de la motte des arbres lorsqu'il s'agit de les transférer d'un endroit de plantation à un autre, qui vise à éviter les problèmes et inconvénients du procédé appliqué traditionnellement pour cela, basé sur l'enveloppement de la motte (2) correspondante, dans une opération manuelle, à l'aide d'une enveloppe (1) qui se fixe au moyen d'une ligature sur le tronc de l'arbre (3) respectif, comme on peut l'observer sur la figure 1.

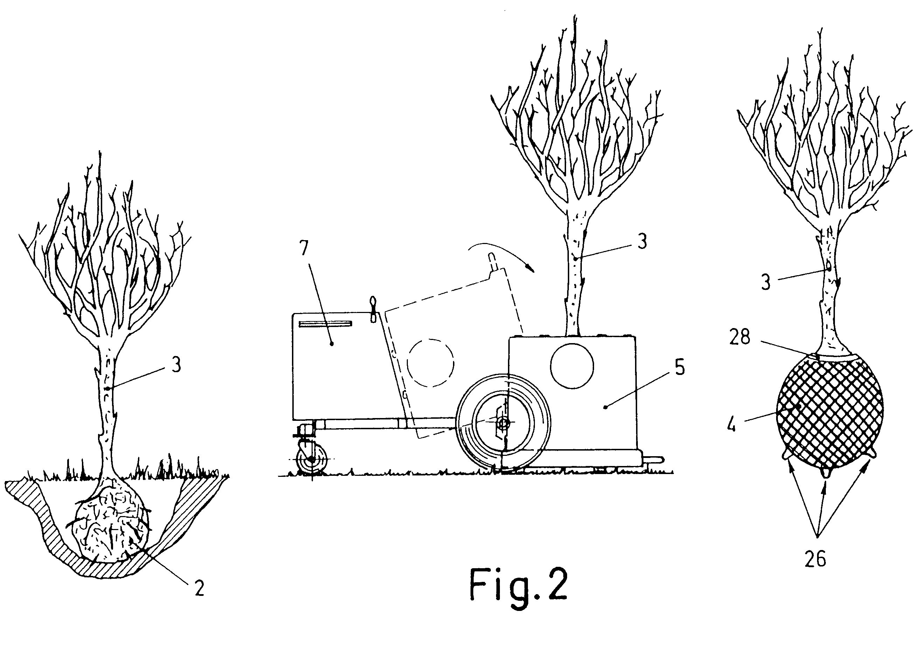

Le système qui est maintenant préconisé selon la présente invention est basé sur l'enveloppement des mottes (2) au moyen d'une membrane (4) en latex, gomme, caoutchouc naturel ou autre matière élastique quelconque de nature biodégradable, ladite membrane (3) étant en forme de globe, de manière que son placement s'effectue par étirage de la membrane avec élargissement simultané de son embouchure (28) en permettant ainsi d'introduire librement dans cette membrane la motte (2) à recouvrir, après quoi, lorsqu'on laisse ladite membrane (4) libre, elle se referme et s'ajuste hermétiquement sur la motte (2) respective, comme on peut l'observer sur la figure 2.

L'étirage de la membrane (4) servant pour le déroulement du processus indiqué, s'effectue d'une façon particulièrement prévue, par la création d'un vide, en établissant sa fixation sur des moyens mécaniques, avec lesquels il est possible d'effectuer l'élargissement de l'embouchure (28), en prévoyant à cet effet une machine équipée d'un corps (5) en forme de cuve, dans lequel sont inclus les moyens qui correspondent à la fonction précitée.

Selon une réalisation préférée, ledit corps (5) est disposé sur un châssis support (6) qui peut se déplacer en roulant, conjointement avec un groupe électrogène (7) qui permet de créer de façon autonome une pression pneumatique pour le fonctionnement, ce qui permet d'utiliser la machine d'une façon totalement indépendante en n'importe quel endroit ou l'on en a besoin ; cependant qu'il est prévu sur le corps (5) de la machine, un aspirateur (8) qui permet de créer le vide nécessaire pour l'étirage des membranes (4).

Selon une solution de montage préférée, le corps (5) est en outre disposé par une liaison articulée sur le support (6), avec possibilité de prendre des positions respectives de travail et de transport, ce qui permet à son tour un transfert facile jusqu'aux lieux d'utilisation, et une avantageuse disponibilité d'utilisation pour le conditionnement de la motte, de manière que les arbres (3) n'aient à être soulevés que le moins possible pour être introduits à l'intérieur.

L'ensemble fonctionnel de fixation des membranes (4) pour le conditionnement de la motte est constitué, selon une forme de réalisation particulière, par une série de bras (9), lesquels sont agencés à l'intérieur du corps-cuve (5), selon un montage tournant, avec possibilité de rapprochement et d'écartement de leur extrémité libre, où est montée une broche (10), par rapport à l'axe central du corps (5) précité.

Lesdits bras (9) sont montés sur des colonnes (11) respectives réparties et distribuées sur la périphérie intérieure du corps (5), chacune d'elles étant munie dans sa région inférieure, d'un élément perpendiculaire (12) au moyen duquel elles s'emboîtent de façon coulissante dans des fentes radiales correspondantes (13) de la périphérie d'une plaque circulaire (14) agencée axialement en montage rotatif à l'intérieur dudit ensemble.

Ladite plaque (4) est reliée, de préférence en deux points diamétralement opposés, à des cylindres (15) qui l'attaquent selon une direction formant un certain angle avec la direction radiale de la plaque, de sorte que, lorsque lesdits cylindres (15) manoeuvrent, ils provoquent une rotation déterminée de la plaque (14) précitée sur son axe.

Et en conséquence, lorsque cette rotation de la plaque (14) précitée se produit, cette dernière agit sur les éléments (12) des colonnes (11) en provoquant une rotation conséquente de ces dernières, de sorte que les bras (9) tournent simultanément à leur tour, les broches (10) s'éloignant ou se rapprochant respectivement de l'axe central du corps (5).

Les broches (10) précitées sont montées sur un axe respectif (16), qui passe axialement le long du bras (9) correspondant et qui, à l'extrémité opposée, présente un élément perpendiculaire (17) au moyen duquel il peut entrer en prise avec un embout (18) qui est monté solidairement en rotation sur la colonne (11), mais avec possibilité de déplacement axial sur cette colonne ; le bras (9) est à son tour ancré à cet embout (18) bloqué en rotation, au moyen d'une tige (19).

L'embout (18) présente sur sa partie extérieure, une conformation centrale creusée en gouttière, dans laquelle passe une couronne (20) qui encercle l'ensemble en passant par les embouts (18) de toutes les colonnes (11), la couronne (20) précitée étant dans ce cas fixée à des tirants (21), lesquels sont reliés à un actionneur (22) situé dans la partie inférieure, de sorte qu'à l'aide desdits tirants (21), la couronne (20) peut être élevée et abaissée, en entraînant les embouts (18), dans une mobilité qui permet le déblocage respectif de ces derniers par rapport à l'élément correspondant (17) des axes (16) respectifs, bien que sans aller jusqu'à dégager la tige (19) du bras (9) correspondant dans chaque cas.

Avec tout ceci, dans la disposition de préparation à l'utilisation, les bras (9) sont orientés vers le centre de l'ensemble, avec leurs broches (10) respectives dirigées vers le haut, l'axe (16) de chacun d'eux restant bloqué sur l'embout (18) correspondant à l'aide de son élément (17) respectif.

Dans cette situation, la membrane (4) que l'on va utiliser peut être montée, par un simple étirage de l'embouchure (28) de cette membrane jusqu'à la disposer de façon à embrasser l'ensemble des broches (10) sur lesquelles elle reste assujettie par sa propre tension élastique.

Lorsqu'on fait maintenant manoeuvrer les cylindres (15), la rotation que la plaque (14) décrit a pour effet que les colonnes (11) tournent à leur tour, en faisant pivoter les bras (9), avec déplacement consécutif des broches (10) vers la périphérie de l'ensemble, de sorte qu'il se produit un ample élargissement de l'ouverture de l'embouchure (28) de la membrane (4) montée, qui permet d'introduire facilement cette dernière vers l'intérieur.

La mise en marche de l'aspirateur (8), dans ces conditions, engendre un vide à l'intérieur du corps-cuve (5) en faisant en sorte que la membrane (4) s'étire, en formant un creux dans lequel la motte (2) qu'il s'agit de recouvrir peut être introduite sans difficulté, simplement en soulevant l'arbre (3) jusqu'à la hauteur adéquate.

Ceci étant fait, lorsqu'on active les actionneurs (22) des tirants (21), ils tirent la couronne (20) vers le bas, de sorte que se produit le désencliquetage des éléments (17) par rapport aux embouts (18), les axes (16) restant libres, de sorte que, sous l'effet de la tension propre de la membrane (4) sur les broches (10), ces dernières basculent, en laissant libre la membrane (4) précitée, laquelle, par sa propre reprise de forme élastique, se referme sur la motte (2) en s'accouplant en pression sur cette motte.

Les axes (16) des bras (9) sont soumis, par l'action d'un ressort (23), à une tendance à prendre le positionnement initial de la situation dans laquelle les broches (10) correspondantes sont en position verticale vers le haut, de sorte que, lorsque la membrane (4) s'échappe lorsque lesdites broches (10) se rabattent sous l'effet de la tension de celle-ci, on retrouve automatiquement la position initiale de verticalité tandis que, lorsque les cylindres (15) sont actionnés dans le sens du retour, il se produit en sens contraire du précédent une rotation inverse de la plaque (14) en faisant à son tour tourner les colonnes (11) dans le même sens contraire, de sorte que les bras (9) reviennent ainsi à la position initiale, tout l'ensemble restant en disposition pour une nouvelle opération de conditionnement de motte.

Ladite réalisation correspond à une forme de complet automatisme du dispositif fonctionnel de mise en place des membranes (4) pour les conditionnements de mottes, mais de même, sans que ceci ne suppose d'altération du principe essentiel du système objet de l'invention, on prévoit une solution pour le décrochage manuel des membranes (4) précitées par rapport aux broches (10), à partir de la position d'étirage, pour que ces membranes se referment sur la motte (2) correspondante qu'il s'agit de recouvrir ; lesdites broches (10) étant dans ce cas dans une disposition fixe sur les bras (9) correspondants, de manière que, pour relâcher la membrane (4) étirée, il faudra la libérer successivement des différentes broches (10), en la décrochant de chacune de ces broches, de sorte que le mécanisme est très simplifié.

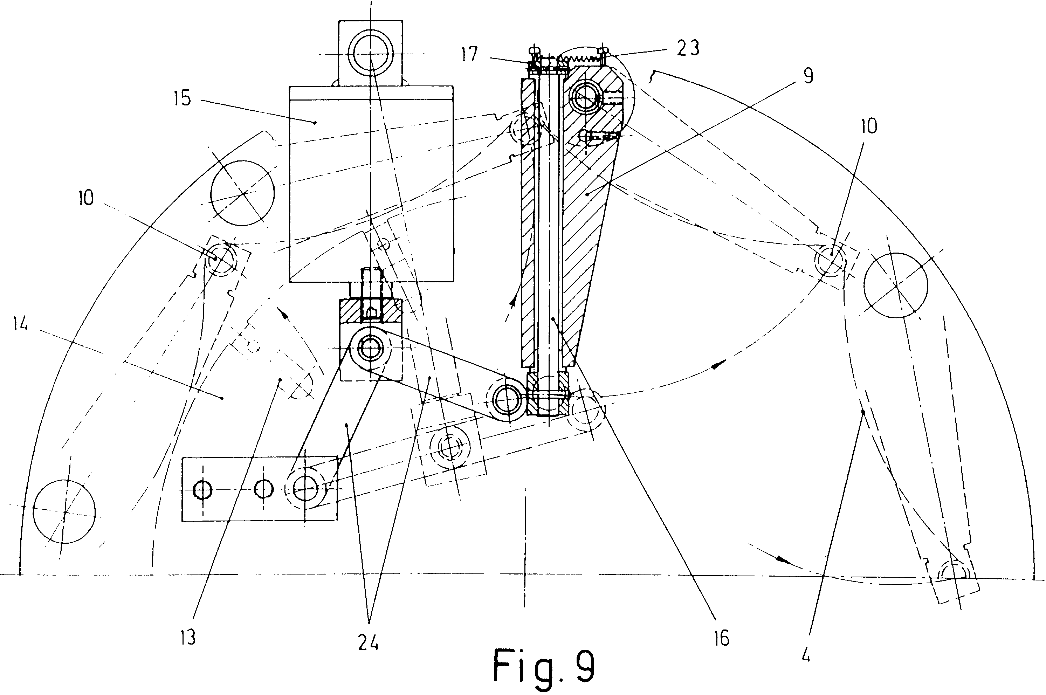

Etant donné que, dans l'ensemble fonctionnel de la machine, on a besoin, d'un côté, d'une impulsion pneumatique, pour l'actionnement des cylindres (15) et des éléments (22) et, d'un autre côté, d'une absorption capable d'engendrer le vide pour l'étirage des membranes (4), afin que les deux fonctions puissent être assurées par le même groupe électrogène (7), qui se comporte tantôt comme un compresseur et tantôt comme un aspirateur, la fixation des cylindres (15) à la plaque (14) s'effectue au moyen de compas (24) respectifs, lesquels, lorsque se produit l'actionnement de poussée pour la rotation de la plaque (14) précitée dans le sens de l'étirage des membranes (4), prennent une position alignée de leurs parties articulées , de sorte qu'ils constituent des tirants qui maintiennent l'ensemble dans la position obligée d'étirage de la membrane (4) qui est montée, sans qu'il soit nécessaire de maintenir la pression dans les cylindres (15) comme on peut l'observer sur la figure 9.

Dans le fond du corps-cuve (5), on prévoit en outre de monter une soupape d'interruption (25) servant à supprimer l'aspiration du vide lorsque les membranes (4) atteignent un degré d'étirage suffisant pour le conditionnement de la motte, de manière que, lorsque la membrane (4) qui se trouve disposée vient buter sur ladite soupape (25), il se produise automatiquement une rupture de l'aspiration, en apportant ainsi une sécurité efficace contre la détérioration possible qui résulterait d'un excès d'aspiration ; tandis que, si, en raison de fuites ou d'une circonstance quelconque, le vide décroît, la reprise de forme élastique de la membrane (4) a pour effet que cette membrane perd le contact avec la soupape (25), de sorte que l'aspiration se produit de nouveau, jusqu'à ce que l'interruption se produise de nouveau comme au début.

Les membranes (4) que l'on utilise pour ladite fonction de conditionnement de motte conforme à l'objet de l'invention, outre le fait qu'elles sont faites d'une matière élastique et biodégradable, comme on l'a déjà indiqué, qui a pour effet qu'il n'est pas nécessaire de les retirer pour la plantation des arbres (3) en question, sont en outre munies de formations (26) en forme de mamelles, qu'il est possible de couper après que la membrane (4) a été placée sur la motte (2) correspondante, afin de former ainsi des orifices de drainage qui évitent l'étouffement de la plante, aussi longtemps que la membrane (4) subsiste sur la motte (2) de la plante.

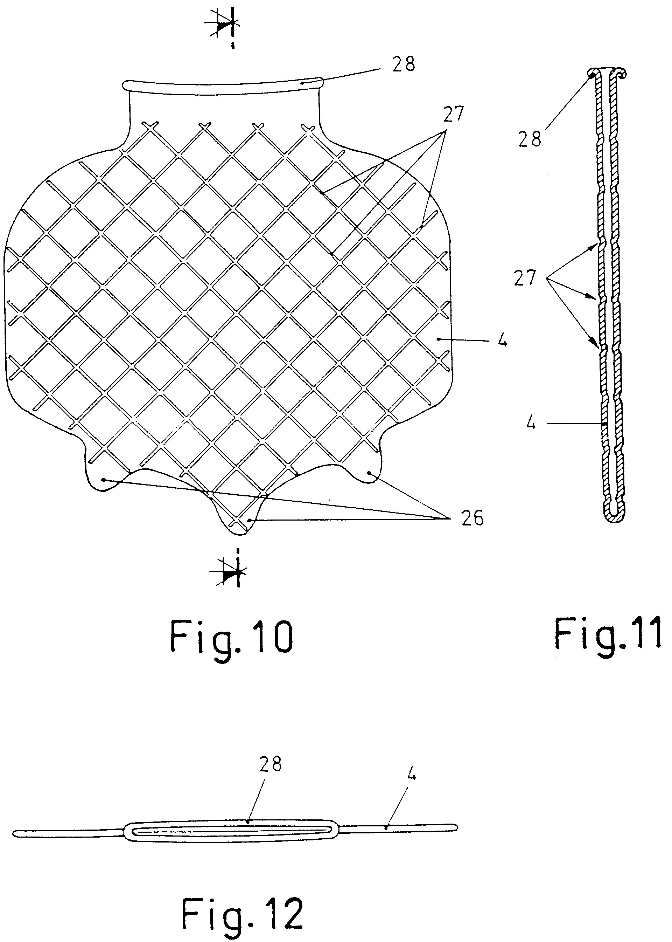

Lesdites membranes (4) sont en outre munies d'une série de nervures entrecroisées (27), comme on peut l'observer sur les figures 10 et 11, de sorte que ces membranes (4) prennent une apparence de grillage, en même temps que les nervures (27) précitées constituent un moyen de raidissement et de protection contre les déchirures, en évitant la propagation de ces déchirures lorsque la membrane (4) est perforée par une racine quelconque qui fait saillie sur la motte (2) comme ceci peut se produire lorsque la membrane s'applique brusquement sur la motte au moment où elle est libérée de son étirage dans l'opération de conditionnement de motte.

La nature de la présente invention étant ainsi suffisamment décrite, de même que sa réalisation industrielle, il suffit d'ajouter qu'il est possible d'introduire dans son ensemble et dans ses parties consécutives des changements de forme, de matière et de disposition sans sortir du cadre de l'invention, pourvu que ces altérations ne sortent pas de son principe.

## Revendications

1. Système pour le conditionnement de mottes d'arbres, caractérisé en ce qu'on utilise, comme élément pour recouvrir les mottes, une membrane élastique en matière biodégradable, configurée en forme de globe, dont la mise en place s'effectue par introduction de la motte à recouvrir dans cette membrane après étirage de cette membrane pour former un creux d'une capacité propre à loger la motte, et par adaptation ultérieure sur cette motte par sa reprise de forme élastique lorsqu'elle est libérée de l'étirage précité.

2. Système pour le conditionnement de mottes d'arbres, selon la revendication 1, caractérisé en ce que l'étirage de la membrane élastique, pour sa mise en place, s'effectue par fixation et élargissement de l'embouchure de la membrane par des moyens mécaniques, et étirage du corps en forme de bourse par l'action d'un vide.

3. Système pour le conditionnement de mottes d'arbres, selon la revendication 1, caractérisé en ce que, selon une réalisation préférée, la membrane élastique est munie de formations en forme de mamelles, lesquelles peuvent être rompues une fois que la membrane a été mise en place, pour former des orifices de drainage.

4. Système pour le conditionnement de mottes d'arbres, selon la revendication 1, caractérisé en ce que la membrane présente sur sa surface un ensemble de nervures entrecroisées en forme de grillage pour éviter la déchirure en réponse à d'éventuelles perforations de la membrane par les racines de la motte.

5. Système pour le conditionnement de mottes d'arbres selon les revendications 1 et 2, caractérisé en ce que les moyens d'étirage de la membrane élastique sont inclus dans un corps en forme de cuve qui, selon une forme de réalisation préférée, est monté, conjointement avec un groupe électrogène actionneur, sur un châssis mobile roulant, de manière à former une unité fonctionnelle autonome.

6. Système pour le conditionnement de mottes d'arbres, selon les revendications 1 et 2, caractérisé en ce que, selon une forme de réalisation préférée, les moyens d'élargissement de l'embouchure de la membrane élastique sont constitués par un ensemble d'éléments qu'on peut faire pivoter en actionnement conjoint, entre des positions de rapprochement et d'écartement, lesdits éléments étant munis d'un organe extrême sur lequel ladite membrane peut se fixer, lequel peut être libéré par un déblocage de rabattement pour permettre de libérer la membrane de sa position étirée.

7. Système pour le conditionnement de mottes d'arbres, selon les revendications 1 et 2, caractérisé en ce que les moyens de vide servant à étirer la membrane sont équipés d'une soupape d'interruption pouvant être actionnée par la membrane elle-même lorsqu'elle atteint un certain degré d'étirage prédéterminé.

8. Système pour le conditionnement de mottes d'arbres selon les revendications 1, 2 et 6, caractérisé en ce que, dans une solution particulière, il est prévu que les organes d'accrochage de la membrane pour l'étirage de cette membrane sont montés de façon fixe sur les éléments respectifs qu'on peut faire pivoter, afin que le décrochage de la membrane par rapport aux organes précités, à partir de la position étirée, s'effectue par une opération manuelle de libération successive par rapport à chacun desdits organes.
